# EUROPEAN PATENT SPECIFICATION

(11) **EP 0 438 804 B1**
(45) Date of publication and mention of the grant of the patent: **18.09.1996**
(21) Application number: 90125703.0
(22) Date of filing: 28.12.1990
(51) Int. Cl.: F02B 27/04, F02B 37/00, F01N 5/04

(54) **Apparatus for driving turbo supercharger**
Turbolader-Antriebsvorrichtung
Dispositif de commande de suralimentation par turbocompresseur

(30) Priority: 28.12.1989 JP 342769/89
(43) Date of publication of application: 31.07.1991
(73) Proprietor: Kakuta, Yoshiaki, Kasukabe-shi Saitama-ken (JP)
(72) Inventor: Kakuta, Yoshiaki, Kasukabe-shi Saitama-ken (JP)
(74) Representative: Füchsle, Klaus, Dipl.-Ing.

(56) References cited:
- EP-A- 0 418 909
- FR-A- 2 338 382
- US-A- 4 308 718
- US-A- 4 864 825

## Description

### BACKGROUND OF THE INVENTION

### FIELD OF THE INVENTION

The present invention relates to an apparatus for driving a turbo supercharger in high efficiency in an internal combustion engine.

### DESCRIPTION OF THE PRIOR ART

A system or an apparatus for rotating an exhaust gas turbine by exhaust gas energy to drive a supercharger and prepressurizing suction gas is known. Recently, the systems have been frequently employed in automotive engines.

The conventional turbo supercharger normally employs only one stage of a centrifugal turbine to convert kinetic energy produced by feeding part or all of exhaust gas discharged from the combustion chamber of an engine to an exhaust gas turbine, into rotary motion as the power of the supercharging turbine. The supercharging turbine prepressurizes suction gas and charges vaporized fuel enhanced in its density to a combustion chamber.

In the conventional system, the following problems arise:
1) There is a time lag until a turbo effect is exhibited.
2) Since it is driven only by a pressing pressure, its criterion is low and the capacity of the turbine cannot be sufficiently produced.
3) Since prepressurized intake gas is superheated by a high temperature equipment, its density is low and its charging efficiency is deteriorated.
4) Since it is driven only by high temperature exhaust gas, the equipment achieves extremely high temperatures that can be dangerous.
5) Engine overheating rate is high.

In view of discussions on these factors, the time lag referred to in the above paragraph 1) is considered to stem from the fact that, since the turbine is rotated at a low speed in the initial operation, exhaust gas pressure (back pressure) is insufficient and the starting torque of the exhaust gas turbine is insufficient. The problem in the above paragraph 2) is considered to be due to the fact that only one direction of the exhaust gas flow acts on the turbine. When the exhaust gas turbine is driven by the exhaust gas energy, the accuracy of the turbine blades is affected, irregular speed distribution and surging occur, and the exhaust gas discharging efficiency after passing the turbine is remarkably reduced by the long duct of an exhaust gas system, comprising a catalyst, a silencer, etc. As regards the problem in the above paragraph 3) it is considered that, particularly in the case of a gasoline engine, decrease in the average effective pressure (Pm) is strongly affected due to the reduction in the air density due to high temperature exhaust gas to cancel the boosting effect. Cooling of suction gas is required to cope with the decrease in the air density. The overheat occurs when the entire engine tends to be constantly overheated, and the influence of the circulated heat of the exhaust gas and the staying heat due to low discharge efficiency are considered.

As a result of the above discussions, the present inventor has repeatedly studied the advantages of driving a supercharger with exhaust gas energy. A conclusion arrived at is that the driving system is malfunctioned only by the kinetic energy of the exhaust gas flow outputted from a combustion chamber. One reason for this exists in that, if the exhaust energy gas which is of high speed exceeding a sonic speed can be utilized as it is, the problem can be relatively reduced, but since in practice large load resistances are incorporated in said long duct of the exhaust gas system, the energy cannot be sufficiently utilized. In other words, if it were possible to have an exhaust gas efficiency equivalent to one having no other resistances such as catalyst, silencer, etc., this problem can be solved. If the exhaust gas efficiency can be improved, the problem of said extremely high temperature of the equipment can be alleviated, and the problems resulting from the heat can be eliminated.

A prior art that is of interest is EP-A-O 418 909, this being a document falling within the terms of Article 54(3) EPC and being one that was filed by the present applicant.

It discloses an apparatus for driving a turbosupercharger wherein an exhaust turbine is driven by exhaust gas energy; and a supercharging compressor is actuated by the exhaust gas turbine so as to supercharge an engine with suction air; the exhaust gas turbine being coupled to an exhaust pipe system; said apparatus comprising:
(a) means introducing exhaust gas streams from the engine into an inlet of said exhaust gas turbine thereby to drive said exhaust gas turbine by positive pressure;
(b) means dividing exhaust gas streams from an outlet of said exhaust gas turbine between said exhaust pipe system and a suction pipe;
(c) a negative pressure generator in said exhaust pipe system directly before the emission of the exhaust gas into the atmosphere to create suction energy; and wherein
(d) said suction pipe is coupled to said suction energy to additionally drive said exhaust gas turbine by said suction energy.

A catalyst unit for purifying exhaust gas and an exhaust muffler are mounted upstream of the negative pressure generator. The suction pipe may include a catalyst unit.

### SUMMARY OF THE INVENTION

The present invention has been accomplished with the above mentioned circumstances in view. It is an object of the present invention to provide an apparatus for driving a turbo supercharger which can positively drive an exhaust gas turbine by exhaust gas flow not substantially affected by a load resistance, to simultaneously suck the exhaust gas flow passing the turbine by a sucking gas flow of low pressure, and simultaneously negatively drive the turbine to remarkably enhance the exhaust gas discharge efficiency.

Thus, a discharge efficiency equivalent to or higher than that in an exhaust gas system having no load resistance can be obtained in the vicinity of the supercharger.

In order to achieve the above object, there is provided according to the present invention an apparatus for driving a turbo supercharger having a turbine inlet for introducing exhaust gas flow to be exhausted at a high speed from a combustion chamber of an internal combustion engine, an exhaust gas turbine to be positively hydraulically driven by the exhaust gas flow introduced from said inlet and a supercharging compressor to be operated by said exhaust gas turbine said apparatus, further having:
an exhaust gas conduit comprising a catalyst unit, an exhaust gas muffler, and a negative pressure generator for discharging the exhaust gas flow from the exhaust gas turbine into the atmosphere for accelerating the exhaust gas flow to form a strong negative pressure as a high speed gas flow; and a suction passage provided between the suction chamber of said negative pressure generator and the exhaust gas conduit:
(a) immediately before the upstream of the catalyst unit; and/or
(b) immediately before the upstream of the exhaust gas muffler for sucking the exhaust gas flow passing the exhaust gas turbine by negative pressure; and
a suction side muffler provided in the suction passage to silence the exhaust gas flow to be fed into a suction chamber of said negative pressure generator via said suction passage.

The suction gas flow accelerates the exhaust gas flow, thereby preferably using the negative pressure generated as driving power.

According to the present invention, the pressing pressure of the exhaust gas passing the turbo supercharger is not excessively increased, the rotating speed is remarkably accelerated, and the speed of the intaken air passing the supercharging turbine is remarkably accelerated. As a result, since the heat of the supercharging turbine is removed at a high speed by the gas flow passing the turbine at high speed, the supercharger and the peripheral temperature are not overheated, but the suction gas temperature is relatively reduced. Therefore, the air density is increased, and means for increasing charging efficiency is provided in this respect.

These and other objects and features of the present invention will become apparent from the following detailed description in conjunction with the attached drawings.

### BRIEF DESCRIPTION OF THE DRAWINGS

Fig. 1 is a schematic view of a first embodiment of a driving apparatus according to the present invention;
Fig. 2 is a longitudinal sectional view of a negative pressure generator;
Fig. 3 is a longitudinal sectional view of a 2-stage acceleration type negative pressure generator;
Fig. 4 is a longitudinal sectional view of sucking means; and
Fig. 5 is a schematic view of a second embodiment of a driving apparatus according to the present invention.

### DESCRIPTION OF THE PREFERRED EMBODIMENTS

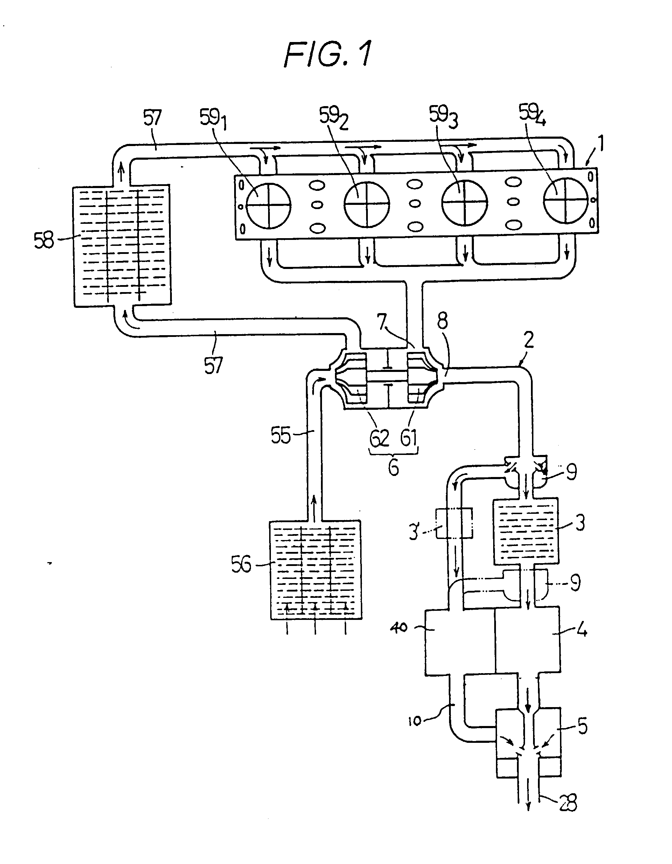

An entire concept of an apparatus for driving a turbo supercharger according to the present invention is shown in Fig. 1. A turbo supercharger 6 is expressed as a normal type in which an exhaust gas turbine 61 is coupled to a supercharging compressor 62 via a shaft, positively hydraulically driven by engine exhaust gas and simultaneously negatively hydraulically driven by suction gas flow formed of exhaust gas flow acceleration.

In Fig. 1, a gasoline engine 1, an exhaust gas conduit 2, a catalyst unit 3 for purifying exhaust gas, an exhaust gas muffler 4, a negative pressure generator 5, and a turbo supercharger 6 are provided. Exhaust gas flow is fed from a turbine inlet 7 disposed immediately after combustion chambers 59₁ to 59₄ to a turbine outlet 8 immediately after the exhaust gas turbine 61 and thence to an exhaust gas conduit 2. Sucking means 9 sucks sucks the exhaust gas flow passing the exhaust gas turbine 61. One or more of said sucking means 9 are provided in the exhaust gas conduit 2 at the downstream of the turbine outlet 8 and at the upstream of the negative pressure generator 5, and the sucking means 9 are coupled to the suction chamber of the negative pressure generator 5 by a suction passage 10.

The exhaust gas conduit 2 includes said catalyst unit 3 downstream of the exhaust gas turbine 61; and said exhaust gas muffler 4 is located between the catalyst unit 3 and the negative pressure generator 5 this generator serving additionally to discharge the exhaust gases to atmosphere via a tail tube 28.

A suction passage 10 is provided between the suction chamber of said negative pressure generator 5 and the exhaust gas conduit 2. As shown in Fig. 1 the suction passage 10 is connected to the gas conduit 2 immediately before the upstream of the catalyst unit 3; and/or immediately before the upstream of the exhaust gas muffler 4. The suction passage 10 serves to create by negative pressure a sucking action on the exhaust gas flow passing the exhaust gas turbine 61.

A suction side muffler 40 is provided in the suction passage 10 to silence the exhaust gas flow to be fed into the suction chamber of the negative pressure generator 5. It is apparent that the exhaust gas conduit 2, the catalyst unit 3 and the muffler 4 form main load resistances of the exhaust gas conduit 2. When the sucking means 9 is provided in the exhaust gas conduit 2 at the upstream of the catalyst unit 3, another catalyst unit 3' is newly provided in the suction passage 10.

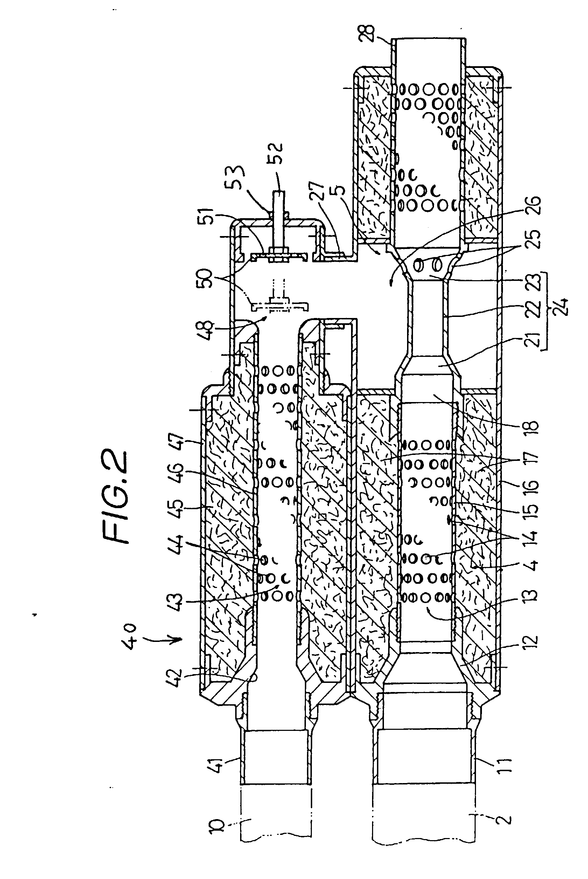

The exemplified negative pressure generator 5 reaccelerates the exhaust gas flow immediately before the discharge of the exhaust gas into the atmospheric air, and the negative pressure formed thereby is utilized as suction energy. The muffler 4 is, as shown in Fig. 2, formed by opening a connection port 11 to the exhaust gas conduit 2, providing a main passage 13 reduced in diameter with a tapered portion 12 at the center and filling a silencing material 17 between the outer periphery of the central cylinder 15 opened at the peripheral surface with vent holes 14 and an outer cylinder 16. The lowermost end of the central cylinder 15 is connected to an acceleration portion, and the exhaust gas flow is effected by silencing action and fed from a main passage outlet 18 to the negative pressure generator 5.

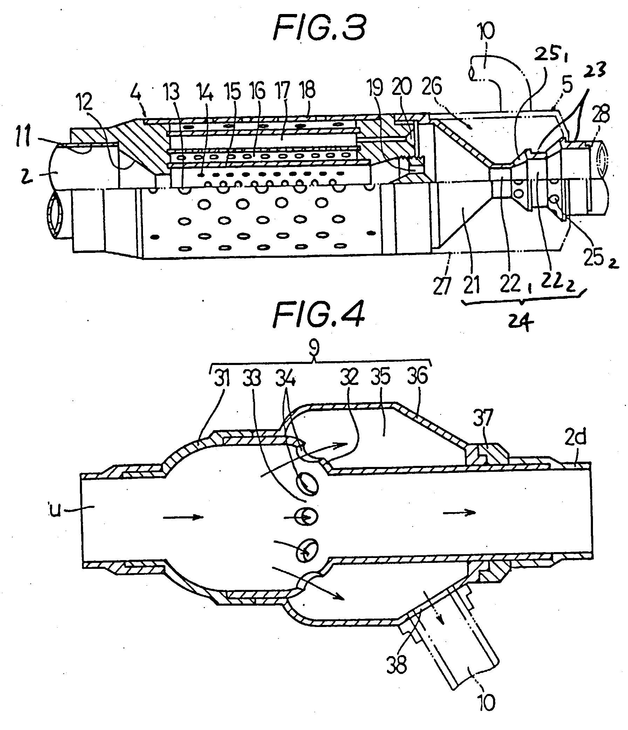

The negative pressure generator 5 is disposed at the lowermost stream of the load resistances, and has a throttle tube 21 connected to the outlet 18, and an accelerator 24 having a throat tube 22 and an expansion tube 23 for further accelerating the exhaust gas flow in multi-stages to form a strong negative pressure, thereby forming negative pressure in a suction chamber 26 communicating with an air inlet 25 formed immediately after the accelerator 24 to suck the air flow through a connecting tube 27 to the rear of the outer cylinder surrounding it. The accelerator may have two stages or three or more stages. The volume V₁ of the accelerator throat tube 22 is set to a volume necessary to throttle the exhaust gas flow to the minimum at the throttle tube 21 to obtain a primary acceleration flow. In the case of the example of multi-stage accelerations shown in Fig. 3, the volume of a second throat tube 22₂ to the volume V₂ of a first throat tube 22₁ satisfies V₂ = AV₁ (A ≒ 2). Of course, this coefficient A may take another arbitrary numeric value. The inner diameter of a tail tube 28 may preferably be the inner diameter or more of the final accelerator. The air inlets 25, 25₁, 25₂ are preferably formed with forwarding angle θ, and this angle θ is larger than "0" and less than "90 degrees", and preferably ranged from 10 to 45 degrees.

The exhaust gas flow is sucked by the high negative pressure formed by the negative pressure generator 5 constructed as described above from the outlet 8 of the exhaust turbine 61 through the suction passage 10. The sucking means 9 and a suction side muffler 40 to be described later are provided to accelerate the exhaust gas flow in advance in the outlet 8. The sucking means 9 has, as shown in Fig. 4, an expansion tube 31 connected to the upstream side 2u of the exhaust gas conduit 2, a throttle tube 32 reduced in diameter again, a suction port 34 opened at the tapered throttle 33 of the tube 32, and connecting means 37 connected to a sucking chamber member 36 formed with a sucking chamber 35 for covering the outer periphery of the throttle tube including a suction port 34 and the downstream side 2d of the exhaust gas conduit 2 for sucking the turbine exhaust gas from outside. The suction passage 10 is connected to the suction chamber member 36 at the connection port 38. The suction port 34 is disposed outside the exhaust gas flow so as to effectively suck and exhaust the exhaust gas flow to be exhausted from the exhaust gas turbine 61.

The above-mentioned suction side muffler 40 silences the exhaust gas flow sucked and fed into the suction chamber 26 through the end of the suction passage 10, controls the flow rate of the exhaust gas flow, and has a connection port 41 to the suction passage 10, a tapered portion 42, a central passage 43, silencing holes 44, silencing material 45 between an outer cylinder 46 and a central cylinder 47, a control chamber at the end of the central cylinder 47, and a movable valve 50 for regulating the exhaust gas flow rate to be sucked through the connecting tube 27 to the suction chamber 26 as described above. The muffler 40 further has small holes 51 in the movable valve 50, a movable valve mounting shaft 52 and a coaxial support 53 with the shaft 52.

In the embodiment in Fig. 1, an air intake tube 55 for sucking air to the supercharging turbine 62, an air cleaner 56 provided therein, a suction air tube 57 for feeding under pressure the sucked gas from the turbine 62 to the suction port, an inter-cooler 58 provided in the suction tube 57 for filling intaken air to combustion chambers 59₁, 59₂, 59₃, 59₄,.. as mixture gas mixed by fuel supply means (not shown) such as fuel injection unit or carburetor, etc.

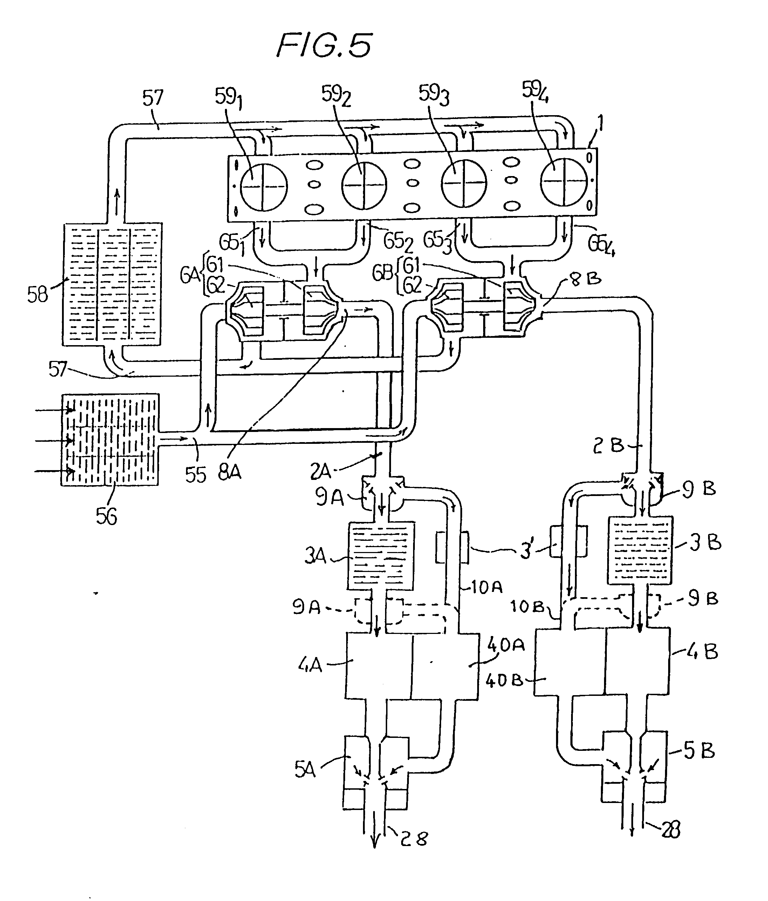

Fig. 5 shows a second embodiment of the present invention. Exhaust gas tubes 65₁, 65₂, 65₃, 65₄ of four-cylinder engine 1 are gathered to two groups, and two turbo superchargers 6A and 6B are respectively driven by the groups. Thus, the exhaust gas system is divided into two system tubes 2A and 2B. Accordingly, exhaust gases discharged from the first and second combustion chambers 59₁ and 59₂ are, for example, fed to drive the first turbo supercharger 6A by the first and second exhaust gas tubes 65₁ and 65₂, to be then accelerated through the first exhaust gas conduit 2A by the first negative pressure generator 5A to be discharged into the atmosphere. Then, the exhaust gases discharged from the third and fourth combustion chambers 59₃ and 59₄ are fed to drive the second turbo supercharger 6B by the third and fourth exhaust gas tubes 65₃ and 65₄ , to be then accelerated through the second exhaust gas conduit 2B by the second negative pressure generator 5B to be discharged into the atmosphere.

Associated with each exhaust gas muffler 4A, 4B is an associated suction side muffler 40A, 40B respectively. The suction side mufflers 40A, 40B serve to silence the exhaust gas flow in their respective suction passage 10A, 10B and interconnect their associated negative pressure generator 5A, 5B with their respective exhaust gas conduit 2A, 2B immediately before the upstream of the catalyst unit 3A, 3B in said respective exhaust gas conduit and/or immediately before the upstream of the exhaust gas muffler 4A, 4B in said respective exhaust gas conduit. Each of the suction passages 10A, 10B has its own catalyst unit 3'.

The way of gathering the exhaust gas tubes 65₁ to 65₄ is not limited to the above example. For example, they can be suitably combined such that the first and fourth combustion chambers 59₁ and 59₄, and the second and third combustion chambers 59₂ and 59₃ are respectively combined. For example, they may be set by considering the sequence of ignitions of the combustion chambers. The air intake tube 55 communicating with the supercharging turbine 62 of the turbo supercharger is so gathered as to be connected to one air cleaner 56 and the suction tube 57 communicating with the combustion chambers from the supercharging turbine outlet is connected to one inter-cooler 58. However, they may be, of course, divided into two systems.

In summary of the descriptions of the apparatus for driving the turbo superchargers, it is understood that the exhaust gases are fed as below or operated as follows.

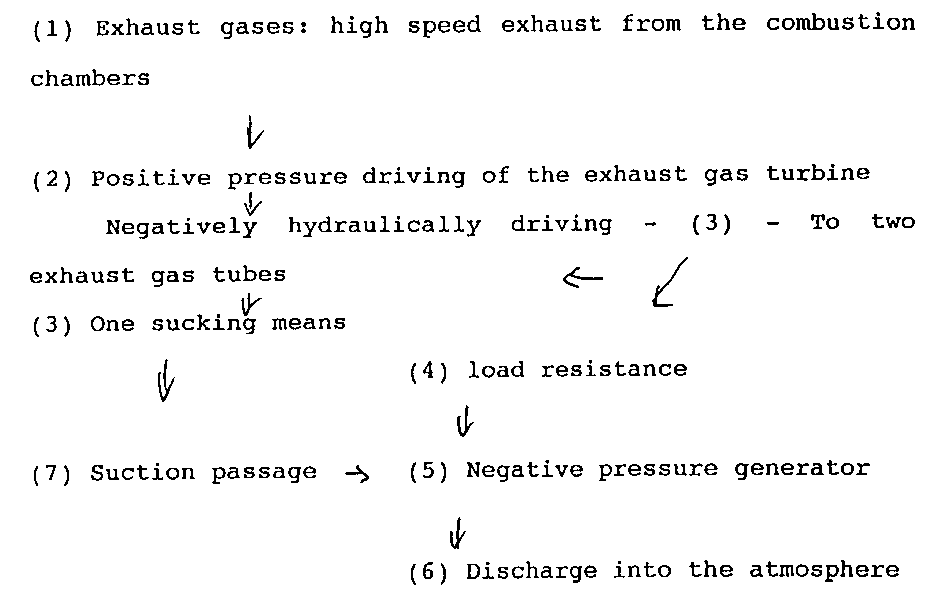

According to the present invention in the arrangement as apparent as described above, the turbo supercharger 6 is positively hydraulically driven by so-called "pressing pressure of the exhaust gas flow, and simultaneously negatively hydraulically driven to be effected by suction. Therefore, since the exhaust gas itself for positively hydraulically driving the exhaust gas turbine 61 is always sucked, the exhaust gas efficiency of the exhaust gas conduit is remarkably enhanced to much higher stage. In other words, the exhaust gas turbine 61 to be driven only by the strong negative pressure formed by the negative pressure generator is simultaneously effected by the pressing of the existing exhaust gas flow.

As a result, according to the present invention, the exhaust gas turbine 61 is driven by both the driving forces in the pressing and the sucking directions. Therefore, in comparison with the conventional exhaust gas turbine driven only by the pressing, the rotating speed is remarkably enhanced.

Since the turbine 61 is simultaneously driven by the positive and negative pressures, its starting characteristic is improved, and its rising curve is approximated to a linear relation. Such simultaneous actions of both the positive and negative pressures on the turbine enhance the supercharging pressure as compared with a conventional one, even one without high accuracy and high performance of the turbine blades, and without means to improve the starting characteristic.

The drive of the exhaust gas turbine 61 reflects the rotating characteristic of the supercharging turbine 62 and the operation thereby. In other words, since the suction pressure is linearly enhanced, the charging efficiency is remarkably improved.

Since the combustion is advanced by the high charging efficiency, it could seem plausible to considered that the exhaust gas temperature is raised. However, as described above, the exhaust gas flow is accelerated, intaking air flow is accordingly accelerated, and the heat is removed at a high speed. Therefore, a built up of the heat scarcely occurs, the temperature of the periphery of the engine is not remarkably raised, but on the contrary is lowered as compared with the conventional turbo.

Consequently, according to the present invention, the following effects can be expected.
1) A time lag of the turbo effect is considerably shortened.
2) Since the turbine is driven by both the positive and negative pressures, the rotating speed is remarkably enhanced to sufficiently utilize the performance of the turbine.
3) Since heat build up is remarkably reduced by the acceleration of the exhaust gas flow this decreases the suction temperature and its density is therefore enhanced to improve the charging efficiency.
4) The temperature around the devices is reduced corresponding to the reduction in the heat build up.
5) The turbo does not cause the engine to be overheated.

According to the present invention as described above, the performance of the turbo supercharger is remarkably enhanced, and the suction gas temperature to be supercharged is reduced.

## Claims

1. An apparatus for driving a turbo supercharger (6) having a turbine inlet (7) for introducing exhaust gas flow to be exhausted at a high speed from a combustion chamber of an internal combustion engine (1), an exhaust gas turbine (61) to be positively hydraulically driven by the exhaust gas flow introduced from said inlet (7) and a supercharging compressor (62) to be operated by said exhaust gas turbine (61), said apparatus further having: an exhaust gas conduit (2) comprising a catalyst unit (3), an exhaust gas muffler (4), and a negative pressure generator (5) for discharging the exhaust gas flow from the exhaust gas turbine (61) into the atmosphere for accelerating the exhaust gas flow to form a strong negative pressure as a high speed gas flow; and a suction passage (10) provided between the suction chamber of said negative pressure generator (5) and the exhaust gas conduit (2):
(a) immediately before the upstream of the catalyst unit (3); and/or
(b) immediately before the upstream of the exhaust gas muffler (4)
for sucking the exhaust gas flow passing the exhaust gas turbine (61) by negative pressure; and
a suction side muffler (40) provided in the suction passage (10) to silence the exhaust gas flow to be fed into a suction chamber (26) of said negative pressure generator (5) via said suction passage (10).

2. An apparatus for driving a turbo supercharger (6) according to Claim 1, wherein sucking means (9) for accelerating the exhaust gas flow in the exhaust gas conduit (2) is located in said conduit (2) at (a) and/or (b), and the suction passage (10) is connected between said sucking means (9) and the suction chamber of said negative pressure generator (5).

3. An apparatus for driving a turbo supercharger according to Claim 1, wherein said internal combustion engine (1) has at least two systems of exhaust gas conduits (2A, 2B) for discharging the exhaust gases from a plurality of combustion chambers (59₁, 59₂ ; 59₃, 59₄), and two or more exhaust turbines (GA61; GB61) communicating with the exhaust gas conduits (2A, 2B) are provided.

## Patentansprüche

1. Vorrichtung zum Antreiben eines Turboladers (6), mit einem Turbineneinlaß (7), um einen Abgasstroms, der mit hoher Geschwindigkeit aus einer Verbrennungskammer eines Verbrennungsmotors (1) abgesaugt werden soll, einer Abgasturbine (61) zuzuführen, die von dem aus dem besagten Einlaß (7) zugeführten Abgasstrom mit Überdruck hydraulisch angetrieben werden soll, und einem Ladekompressor (62), der von der besagten Abgasturbine (61) angetrieben werden soll, wobei die besagte Vorrichtung weiter aufweist: eine Abgasleitung (2), umfassend eine Katalysatoreinheit (3), einen Abgasschalldämpfer (4) und eine Unterdruckerzeugungsvorrichtung (5) zum Ausstoßen des Abgasstroms aus der Abgasturbine (61) in die Atmosphäre zur Beschleunigung des Abgasstroms, um als Hochgeschwindigkeits-Gasstrom einen starken Unterdruck zu erzeugen; und einem Saugdurchlaß (10), der zwischen der Saugkammer der besagten Unterdruckerzeugungsvorrichtung (5) und der Abgasleitung (2) vorgesehen ist:
(a) in Strömungsrichtung unmittelbar vor der Katalysatoreinheit (3); und/oder
(b) in Strömungsrichtung unmittelbar vor dem Abgasschalldämpfer (4)
zum Ansaugen des durch die Abgasturbine (61) hindurchtretenden Abgasstroms durch Unterdruck; und
einen im Saugdurchlaß (10) vorgesehenen saugseitigen Schalldämpfer (40) zur Schalldämpfung des Abgasstroms, der durch den besagten Saugdurchlaß (10) in eine Saugkammer (26) der besagten Unterdruckerzeugungsvorrichtung (5) zugeführt werden soll.

2. Vorrichtung zum Antreiben eines Turboladers (6) nach Anspruch 1, dadurch gekennzeichnet, daß eine Saugeinrichtung (9) zum Beschleunigen des Abgasstroms in der Abgasleitung (2) in der besagten Leitung (2) an der Stelle (a) und/oder (b) angeordnet ist, und der Saugdurchlaß (10) zwischen der besagten Saugeinrichtung (9) und der Saugkammer der besagten Unterdruckerzeugungsvorrichtung (5) angeordnet und mit diesen verbunden ist.

3. Vorrichtung zum Antreiben eines Turboladers (6) nach Anspruch 1, dadurch gekennzeichnet, daß der besagte Verbrennungsmotor (1) mindestens zwei Abgasleitungssysteme (2A, 2B) zum Abführen der Abgase aus einer Mehrzahl von Verbrennungskammern (59₁, 59₂; 59₃, 59₄) aufweist, und daß zwei oder mehr Abgasturbinen (6A 61; 6B 61) vorgesehen sind, die mit den Abgasleitungen (2A, 2B) verbunden sind.

## Revendications

1. Dispositif pour commander un turbocompresseur (6) ayant une entrée de turbine (7) pour introduire un écoulement de gaz d'échappement devant être évacué à haute vitesse à partir d'une chambre de combustion d'un moteur à combustion interne (1), une turbine à gaz d'échappement (61) pour être entraînée hydrauliquement de manière positive par l'écoulement du gaz d'échappement introduit à partir de ladite entrée (7) et un compresseur de surcompression (62) devant être actionné par ladite turbine à gaz d'échappement (61), ledit dispositif ayant en outre : un conduit de gaz d'échappement (2) comprenant une unité à catalyseur (3), un silencieux de gaz d'échappement (4) et un générateur de pression négative (5) pour décharger l'écoulement du gaz d'échappement provenant de la turbine à gaz d'échappement (61) dans l'atmosphère afin d'accélérer l'écoulement du gaz d'échappement et former une forte pression négative comme un écoulement de gaz à haute vitesse; et un passage d'aspiration (10) fourni entre la chambre d'aspiration dudit générateur de pression négative (5) et le conduit (2) du gaz d'échappement;
(a) immédiatement avant l'amont de l'unité à catalyseur (3); et/ou
(b) immédiatement avant l'amont du silencieux du gaz d'échappement (4)
pour aspirer l'écoulement du gaz d'échappement traversant la turbine à gaz d'échappement (61) sous l'effet d'une pression négative; et
un silencieux du côté aspiration (40) fourni dans le passage d'aspiration (10) pour atténuer les sons de l'écoulement du gaz d'échappement devant être introduit dans une chambre d'aspiration (26) dudit générateur de pression négative (5) via ledit passage d'aspiration (10).

2. Dispositif pour commander un turbocompresseur (6) selon la revendication 1, dans lequel un moyen aspirant (9) pour accélérer l'écoulement du gaz d'échappement dans le conduit du gaz d'échappement (2) est situé dans ledit conduit (2) à (a) et/ou (b), et le passage d'aspiration (10) est connecté entre ledit moyen aspirant (9) et la chambre d'aspiration dudit générateur de pression négative (5).

3. Dispositif pour commander un turbocompresseur selon la revendication 1, dans lequel ledit moteur à combustion interne (1) comporte au moins deux systèmes de conduit de gaz d'échappement (2A, 2B) pour décharger les gaz d'échappement provenant d'une pluralité de chambres de combustion (59₁, 59₂, 59₃, 59₄), et deux turbines d'échappement ou plus (GA61; GB61) communiquant avec les conduits de gaz d'échappement (2A, 2B) sont fournies.
